# EUROPÄISCHE PATENTSCHRIFT

(11) **EP 3 003 550 B1**
(45) Veröffentlichungstag und Bekanntmachung des Hinweises auf die Patenterteilung: **14.08.2024**
(21) Anmeldenummer: 14727214.0
(22) Anmeldetag: 30.05.2014
(51) Int. Cl.: B01J 19/32, B01D 59/02, F28F 25/08

(54) **PACKUNGSLAGE FÜR EINE STRUKTURIERTE PACKUNG**
PACKAGE LAYER FOR A STRUCTURED PACKAGE
ENSEMBLE DE GARNISSAGE POUR UN EMBALLAGE STRUCTURÉ

(30) Priorität: 07.06.2013 EP 13170966
(43) Veröffentlichungstag der Anmeldung: 13.04.2016
(73) Patentinhaber: Sulzer Management AG, 8401 Winterthur (CH)
(72) Erfinder: WEHRLI, Marc, CH-8311 Brütten (CH)
(74) Vertreter: Henkel & Partner mbB
(86) Internationale Anmeldenummer: PCT/EP2014/061235
(87) Internationale Veröffentlichungsnummer: WO 2014/195233

(56) Entgegenhaltungen:
- EP-A1- 0 807 462
- WO-A1-85/05171
- DE-A1- 3 239 510
- DE-T2- 69 702 477

## Beschreibung

Die Erfindung betrifft eine Packungslage für eine strukturierte Packung gemäss dem Oberbegriff des unabhängigen Anspruchs 1.

Eine Packungslage für eine strukturierte Packung ist in einer handelsüblichen Ausführungsform ein folienartiges gefaltetes Material, wobei in einer strukturierten Packung mehrere Packungslagen hintereinander angeordnet sind. Ein Wellungsmuster der Packungslage weist dabei in Bezug auf eine Kolonnenachse geneigte Strömungskanäle auf. Diese geneigten Strömungskanäle beeinflussen die Strömungen einer Gas- und Flüssigphase innerhalb der strukturierten Packung positiv, d.h. in den Strömungskanälen der strukturierten Packung werden Gas- und Flüssigphase in Kontakt gebracht und somit der Stofftransport zwischen den Phasen begünstigt. Die Neigung benachbarter Lagen ist entgegengesetzt, sodass eine Kreuzkanalstruktur entsteht.

Um die Leistung, beispielsweise die Trennleistung, der Packungslagen oder einer strukturierten Packung zu steigern, wird üblicherweise die Oberfläche der Packungslagen oder der strukturierten Packung vergrössert. Bei Packungslagen führt insbesondere eine Rillierung und / oder eine Lochung zu einer Verbesserung der Leistung. Nach der Lehrmeinung dienen die Rillen der besseren Verteilung der Flüssigkeit auf der Oberfläche und die Löcher bzw. die Perforierung dazu der Flüssigkeit einen Durchtritt von einer zur anderen Seite der Packungslage zu ermöglichen. Aufgrund der Verarbeitung des folienartigen Materials, beispielsweise werden die Löcher meistens ausgestanzt, entstehen jedoch erhebliche Materialverluste. Die bessere Verteilung der Flüssigkeit und somit eine bessere Benetzung der Packungslage ermöglicht die bessere Nutzung der vorhandenen geometrischen Fläche für den Stoffaustausch. Bei strukturierten Packungen wird eine Verbesserung meist dadurch erreicht, dass die Berieselungsdichte pro Kantenlänge der strukturierten Packung optimiert wird, also dieses Verhältnis möglichst groß gemacht wird, um eine vorhandene Fläche zu benetzen.

In der US 4,296,050 wird eine Packungslage beschrieben, die aus einem folienartigen Material besteht. Die Packungslage umfasst eine Riffelung als erste Feinstrukturierung, eine Lochung als zweite Feinstrukturierung und eine gefaltete Erscheinungsform, beispielsweise Lamellen, als Wellungsmuster. Außerdem ist die Packungslage derart ausgerichtet, dass die gefaltete Erscheinungsform in einem Winkel gegen eine Kolonnenachse ausgerichtet ist.

In der DE 697 02 477 T2 wird ein strukturiertes Packungselement beschrieben, mit Wellungen gewellt ist, welche abwechselnd Spitzen und Mulden über das strukturierte Packungselement ausbilden, wobei die Wellungen eine Längsachse aufweisen, wobei das strukturierte Packungselement mindestens ein Band einer ersten Verrippung in einem Winkel zwischen 0° und 180° zur Längsachse der Wellungen aufweist, sowie mindestens ein Band einer zweiten Verrippung bei einem Winkel zwischen 0° und 180° zur Längsachse der Wellungen, wobei die erste Verrippung in einem Winkel zur zweiten Verrippung liegt, der größer ist als Null.

Die EP 0 190 435 A1 beschreibt eine Packungslage aus dünnem, folienartigem Material deren Oberfläche durch Prägen strukturiert ist. Dabei sind die Höhe der Erhebungen bzw. Vertiefungen der ersten Feinstrukturierung grösser als die Dicke des folienartigen Materials. Die erste Feinstrukturierung sind als durchgehende, sich kreuzende Rinnen ausgebildet, die auf der Vorder- und Rückseite des folienartigen Materials identisch sind. Die Erhebungen bzw. Vertiefungen der ersten Feinstrukturierung, welche die Rinnen bilden, können verschiedene Formen aufweisen, beispielsweise können sie pyramiden-, pyramidenstumpf-, kegel-, kegelstumpf- oder kugelkalottenförmig ausgebildet sein.

Eine strukturierte Packung mit senkrecht angeordneten Packungslagen, die ein Wellungsmuster aufweisen und die quer zur Kolonnenachse eine stehende Reihen von abstandsweise angeordneten Löchern aufweist, ist in der DE 26 01 890 A1 offenbart. Die Packungslagen sind dabei derart in der Kolonne angeordnet, dass die Packungslagen parallel zur Kolonnenachse angeordnet sind. Das Wellungsmuster ist gegenüber der Kolonnenachse geneigt, wobei benachbarte Packungslagen derart angeordnet sind, dass sich ihr Wellungsmuster kreuzt. Bei Packungslagen im planaren Zustand, also ohne Wellungsmuster, sind die Löcher von übereinanderliegenden, benachbarten Lochreihen derart gegeneinander versetzt, dass die zwischen jeweils zwei Löchern von der obersten Lochreihe liegende Fallstrasse Löcher von darunterliegenden Lochreihen trifft.

In der EP 1 145 761 B1 wird eine geordnete Kolonnenpackung beschrieben, die Packungslagen aus einem folienartigen Material umfasst eine erste und zweite Feinstrukturierung sowie ein Wellungsmuster. Die Packungslage ist mit konkaven und konvexen Strukturelementen in einer alternierenden Anordnung profiliert bzw. geprägt und weist eine zweite Feinstrukturierung auf, die aus regelmässig angeordneten Durchbrüchen besteht, die beispielsweise mittels einer plastischen Umformung hergestellt werden. Dabei besteht zwischen den Zentren benachbarter konkaver bzw. konvexer Strukturelemente ein mittlerer Abstand a und zwischen den Zentren benachbarter Durchbrüche ein mittlerer Abstand b, wobei der mittlerer Abstand b kleiner als der mittlere Abstand a ist.

Das plastische Umformen zur Herstellung der Durchbrüche der in der EP 1 145 761 B1 beschriebenen Packungslage, erfolgt beispielsweise durch Schlitzen oder Prägen, sodass das Herstellen der Durchbrüche sehr aufwändig ist. Ausserdem handelt es sich bei dem verwendeten folienartigen Material um ein Streckmetall, dessen Verarbeitung sehr aufwändig und kostenintensiv ist.

Aus der DE 32 39 510 ist eine Packung für eine Austauschkolonne für abwärts fliessende Flüssigkeit und aufsteigendes Gas berkannt, die aus Blechen besteht, die nach dem Einbau in die Kolonnen in parallelen vertikalen Ebenen liegen und so geformt sind, dass sie einander nur stellenweise berühren, wobei die Bleche auf einer Seite Vorsprünge aufweisen, deren Höhe und Breite in der Grössenordnung von 1 bis 3 mm liegen und die in schräg zur Vertikalen lie genden Reihen derart angeordnet sind, dass die Wege der über das Blech abwärtsfliessenden Flüssigkeit im Wesentlichen schräg zur Vertikalen liegen.

Aufgabe der Erfindung ist daher, eine strukturierte Packung mit einer Packungslage vorzuschlagen, deren Herstellung kostengünstig ist.

Erfindungsgemäß wird diese Aufgabe durch eine strukturierte Packung mit den Merkmalen des Anspruchs 1 gelöst, also durch eine strukturierte Packung, die eine Mehrzahl von Packungslagen umfasst, wobei benachbarte Packungslagen sich berühren und die Strömungskanäle benachbarter Packungslagen sich offen kreuzen, wobei mindestens eine Packungslage mehrere Strukturelemente umfasst und die Strukturelemente derart ausgestaltet und angeordnet sind, dass sie eine erste Feinstrukturierung bilden, und wobei benachbarte Strukturelemente einen ersten Abstand aufweisen, wobei die Packungslage mehrere Ausbuchtungen, wobei zumindest eine Ausbuchtung eine umlaufende Kante aufweist, umfasst, die derart ausgestaltet und angeordnet sind, dass sie eine zweite Feinstrukturierung bilden, und wobei benachbarte Ausbuchtungen einen zweiten Abstand aufweisen, wobei die Strukturelemente und die Ausbuchtungen lochfrei ausgestaltet sind, der ersten und zweiten Feinstrukturierung ein Wellungsmuster überlagert ist und das Wellungsmuster benachbarte Strömungskanäle ausbildet.

Vorzugsweise befinden sich die erste Feinstrukturierung und die zweite Feinstrukturierung am gleichen Ort.

Die abhängigen Ansprüche beziehen sich auf besonders vorteilhafte Ausführungsformen der Erfindung. Vorteilhafte Ausgestaltungen der Packungslage sowie der daraus gebildeten strukturierten Packung und Kolonne sind Gegenstand der abhängigen Ansprüche.

Vorteil ist, dass die Packungslage der erfindungsgemässen strukturierten Packung mit lochfreien Strukturelementen und Ausbuchtungen keine Stanzverluste und eine um ca. 10% grössere Austauschfläche aufweist. Messungen an Packungslagen mit einen zweiten Abstand aufweisen. Erfindungsgemäss sind die Strukturelemente und die Ausbuchtungen lochfrei ausgestaltet.

Vorteil ist, dass die erfindungsgemässe Packungslage mit lochfreien Strukturelementen und Ausbuchtungen keine Stanzverluste und eine um ca. 10% grössere Austauschfläche aufweist. Messungen an Packungslagen mit lochfreien Strukturelementen und Ausbuchtungen, also einer lochfreien ersten und zweiten Feinstrukturierung, führen zu dem vorteilhaften Resultat, dass diese die gleiche Trennleistung (Effizienz) bei gleichem Druckverlust aufweisen wie eine Packungslage mit Strukturelementen und Löchern. Die überraschende Schlussfolgerung aus dem Vergleich ist, dass die lochfreien Strukturelemente und Ausbuchtungen als Ersatz für die Lochung eine mindestens genauso gute Effizienz bewirken wie Packungslagen mit Löchern, obwohl eine wesentliche Funktion der Lochung nicht mehr vorhanden ist, nämlich weder die Möglichkeit für die Flüssigkeit, durch das folienartige Material durchzutreten, noch der verbesserte Gasaustausch. Somit kombiniert die erfindungsgemässe Lösung, den Vorteil lochfreier Strukturelemente und Ausbuchtungen mit einem fehlenden Stanzverlust, wodurch die Packungslage kostengünstiger herzustellen ist.

Die Packungslage umfasst mehrere Strukturelemente, die derart ausgestaltet und angeordnet sind, dass sie eine erste Feinstrukturierung bilden. Die Packungslage kann ein folienartigen Material, beispielsweise ein Blech oder eine Folie, sein und das Material kann beispielsweise ein Metall oder eine metallische Legierung, ein rostfreier Stahl, ein keramischer Stoff oder ein Kunststoff sein. Das folienartige Material besteht mit Vorteil aus einer metallischen Legierung. Die Dicke des folienartigen Materials kann beispielsweise in einem Bereich zwischen 0.05 und 0.5 mm, insbesondere zwischen 0.1 und 0.3mm, liegen.

Die erste Feinstrukturierung kann eine feinskalige Grundtextur oder eine feinskalige Riffelung sein, die durch die Strukturelemente ausgebildet wird. Somit ist unter einer ersten Feinstrukturierung eine feinskalige Grundtextur oder eine feinskalige Riffelung zu verstehen, die mittels einer Aufrauung der Oberfläche der Packungslage beispielsweise durch Rillung oder Einprägen von Strukturelementen hergestellt wird.

Die Strukturelemente können beispielsweise durch Prägen des folienartigen Materials ausgebildet werden. Die Strukturelemente können dabei eine konvexe oder konkave Geometrie aufweisen. Die Strukturelemente können bevorzugt pyramiden-, pyramidenstumpf-, kegel-, kegelstumpf- oder kugelkalottenförmig sein, wobei Spitzen oder Gipfel angrenzender Strukturelemente bevorzugt in entgegengesetzte Richtung weisende Erhebungen oder Vertiefungen im folienartigen Material ausbilden. Die Strukturelemente können aber auch nur in eine Richtung des folienartigen Materials Erhebungen oder Vertiefungen ausbilden. Die Erhebungen oder Vertiefungen der Strukturelemente können dabei regelmässig oder unregelmässig abwechselnd sein, insbesondere können fünf Strukturelemente in einer W-Form angeordnet sein. Unter einer W-Form ist dabei zu verstehen, dass an allen Ecken des W ein Strukturelement angeordnet ist.

Die Strukturelemente können aufgrund der Erhebungen bzw. Vertiefungen als Rinnen ausgebildet sein und beispielsweise sich kreuzende Rinnen aufweisen, die symmetrisch in Bezug auf eine Kolonnenachse angeordnet sein können. Dabei kann eine Höhe der Strukturelemente, also eine Höhe der Erhebungen bzw. eine Tiefe der Vertiefungen beispielsweise grösser als die Foliendicke sein. Die erste Feinstrukturierung, welche durch die Strukturelemente ausgebildet wird, kann beispielsweise auf der Vorder- und Rückseite identisch sein. Ein Strukturelement, das auf einer Seite des folienartigen Materials als Vertiefung ausgebildet ist, kann dabei beispielsweise auf der gegenüberliegenden Seite einer Erhebung entsprechen. Es ist weiterhin vorteilhaft, ein Längenmass der Strukturelemente so zu wählen, dass es beispielsweise zwischen 0,5 und 5 mm liegt, und eine Tiefe bzw. Höhe der Strukturelemente, also der Erhebungen oder Vertiefungen, zwischen 0,1 bis 2 mm liegt. Unter dem Längenmass ist dabei ein die Geometrie der Strukturelemente oder Ausbuchtungen parallel zur Austauschfläche der Packungslage charakterisierender Parameter zu verstehen, beispielsweise der Durchmesser bei einem kreisförmigen Umfang, eine Seitenlänge bei einem quadratischen Umfang oder die Wellenlänge bzw. Breite einer Rille oder Lamelle bei einer Rillen- oder Lamellenform.

Die Strukturelemente können aber auch als Rillen oder Lamellen ausgebildet sein und die erste Feinstrukturierung somit als eine Feinriffelung ausgebildet sein. Die Feinriffelung kann in einer zacken- oder wellenförmigen Profilierung oder Prägung der Rillen oder Lamellen bestehen. Die erste Feinstrukturierung mit Rillen oder Lamellen als Strukturelemente kann beispielsweise mit einem Einschlusswinkel von 10-80° Grad, einer Wellenlänge bzw. Breite von 0,5 bis 5 mm und einer Tiefe bzw. Höhe von 0,1 bis 2 mm ausgebildet sein. Die erste Feinstrukturierung kann auch aus durchgehenden, sich kreuzenden Rillen bzw. Lamellen ausgebildet sein. Die Rillen oder Lamellen können symmetrisch zu einer Kolonnenachse z ausgebildet sein und zur Kolonnenachse einen Winkel von 0 bis 90 Grad einschliessen. Vorteilhafterweise sorgt die erste Feinstrukturierung, also die Strukturelemente, unabhängig davon, ob diese beispielsweise Erhebungen, Vertiefungen oder Rillen sind, für eine restlose und feinskalige Ausbreitung des Fluids, insbesondere für die weitere Ausbreitung eines bestehenden Flüssigkeitsfilms.

Die Packungslage umfasst ausserdem mehrere Ausbuchtungen, die derart ausgestaltet und angeordnet sind, dass sie eine zweite Feinstrukturierung bilden, und wobei benachbarte Ausbuchtungen einen zweiten Abstand aufweisen. Die zweite Feinstrukturierung kann eine grobskalige Überlagerungstextur oder eine grobskalige Riffelung sein, die durch die Ausbuchtungen ausgebildet wird. Somit ist unter einer zweiten Feinstrukturierung eine grobskalige Überlagerungstextur oder eine grobskalige Riffelung zu verstehen, die mittels einer Aufrauung der Oberfläche der Packungslage beispielsweise durch Einprägen von Ausbuchtungen hergestellt wird.

Die Ausbuchtungen können beispielsweise durch Prägen des folienartigen Materials der Packungslage ausgebildet werden. Die Ausbuchtungen können dabei eine konvexe oder konkave Geometrie aufweisen. Die Ausbuchtungen können bevorzugt pyramiden-, pyramidenstumpf-, kegel-, kegelstumpf- oder kugelkalottenförmig sein, wobei Spitzen oder Gipfel angrenzender Ausbuchtungen bevorzugt in entgegengesetzte Richtung weisende Erhebungen oder Vertiefungen im folienartigen Material ausbilden. Die Ausbuchtungen können aber auch nur in eine Richtung des folienartigen Materials Erhebungen oder Vertiefungen ausbilden. Die Ausbuchtungen können insbesondere auch als ringförmige Ausbuchtungen geprägt sein, wobei ein innerer Ring beispielsweise eine Variante der Strukturelemente oder keine Strukturelemente, bevorzugt Strukturelemente umfassen kann. Es kann aber ebenso ein Bereich ohne zweite Feinstrukturierung, also ohne Ausbuchtungen auf der Packungslage vorhanden sein, in welchem die erste Feinstrukturierung zumindest teilweise noch erkennbar und funktionstüchtig ist, oder umgekehrt.

Die Erhebungen oder Vertiefungen der Ausbuchtungen können dabei regelmässig oder unregelmässig abwechselnd sein, insbesondere können fünf Ausbuchtungen in einer W-Form angeordnet sein. Eine Höhe der Ausbuchtungen, also eine Höhe der Erhebungen bzw. eine Tiefe der Vertiefungen, kann beispielsweise grösser als die Foliendicke sein. Die zweite Feinstrukturierung, welche durch die Ausbuchtungen ausgebildet wird, kann beispielsweise auf der Vorder- und Rückseite identisch sein. Eine Ausbuchtung, die auf einer Seite des folienartigen Materials als Vertiefung ausgebildet ist, kann dabei beispielsweise auf der gegenüberliegenden Seite einer Erhebung entsprechen. Die Ausbuchtungen können beispielsweise ein Längenmass von 2-8 mm und eine Höhe/Tiefe von 0,5-4 mm, bevorzugt 1-3 mm aufweisen.

Die Ausbuchtungen können ebenfalls als Rillen oder Lamellen ausgebildet sein und die zweite Feinstrukturierung somit als eine Grobriffelung ausgebildet sein. Die Grobriffelung kann aus einer zacken- oder wellenförmigen Profilierung oder Prägung der Rillen oder Lamellen ausgebildet sein. Die zweite Feinstrukturierung mit Rillen oder Lamellen als Ausbuchtungen kann beispielsweise mit einem Einschlusswinkel von 10-80° Grad, einer Wellenlänge bzw. Breite von 2 bis 8 mm und einer Tiefe bzw. Höhe von 0,5 bis 3 mm ausgebildet sein. Die zweite Feinstrukturierung kann auch aus durchgehenden, sich kreuzende Ausbuchtungen in Form von Rillen ausgebildet sein, die beispielsweise symmetrisch zur Kolonnenachse z ausgebildet sein können. Die Rillen können zur Kolonnenachse z einen Winkel von 0 bis 90 Grad einschliessen. Vorteilhafterweise sorgt die zweite Feinstrukturierung, also die Strukturelemente, für eine erste und grobskalige Ausbreitung des Fluids.

Vorteilhafterweise dient die erste Feinstrukturierung, also die Strukturelemente, dabei der Zerteilung von kleinen Rinnsalen und zur weiteren Ausbreitung von Flüssigkeitsfilmen, wohingegen die zweite Feinstrukturierung, die Ausbuchtungen, der Zerteilung der gröberen Strömungsstrukturen dienen, z.B. werden größere Rinnsale oder dickerer Filme an den Ausbuchtungen beispielsweise zweigeteilt, sodass kleine Rinnsale entstehen.

Direkt benachbarte Strukturelemente weisen einen ersten Abstand auf, wobei der erste Abstand in Abhängigkeit von der Geometrie der Strukturelemente zu definieren ist. Der erste Abstand kann ein mittlerer Abstand zwischen den geometrischen Schwerpunkten der Grundfläche oder Grundlinie direkt benachbarter Strukturelemente sein. Die Strukturelemente können beispielsweise eine konvexe oder konkave Geometrie aufweisen, können also als Erhebungen oder Vertiefungen ausgebildet sein, sodass unter dem ersten Abstand beispielsweise ein mittlerer Abstand zwischen den geometrischen Schwerpunkten der Grundfläche direkt benachbarter Erhebungen oder Vertiefungen zu verstehen ist. Sind die Strukturelemente als Rillen oder Lamellen ausgebildet, kann unter dem ersten Abstand beispielsweise eine halbe Wellenlänge der zacken- oder wellenförmigen Rillen oder Lamellen, also einer zackenförmigen oder wellenförmigen Erhebung oder Vertiefung, verstanden werden. Eine Wellenlänge kann dabei als der Abstand zweier direkt benachbarter zacken- oder wellenförmigen Erhebungen oder Vertiefungen definiert werden. Die halbe Wellenlänge als erster Abstand ergibt sich dann daraus, dass der geometrische Schwerpunkt dem Mittelpunkt der Grundlinie der zackenförmigen oder wellenförmigen Erhebung oder Vertiefung entspricht und somit der erste Abstand dem mittleren Abstand der geometrischen Schwerpunkte direkt benachbarter zackenförmigen oder wellenförmigen Erhebungen und Vertiefungen entspricht, was wiederum der halben Wellenlänge entspricht. Die gleiche Definition gilt für die Berechnung des zweiten Abstands direkt benachbarter Ausbuchtungen. Der zweite Abstand kann also als ein mittlerer Abstand zwischen den geometrischen Schwerpunkten der Grundfläche oder Grundlinie direkt benachbarter Ausbuchtungen verstanden werden. Ebenso kann das beispielhafte Vorgehen auf die Berechnung des zweiten Abstands bei verschiedenen Geometrien übertragen werden.

Die erste und zweite Feinstrukturierung werden durch eine Strukturierung auf das folienartige Material aufgebracht, wobei unter einer Strukturierung bevorzugt das Prägen des folienartigen Material zu verstehen ist. Die dabei entstehenden Strukturelemente oder Ausbuchtungen sind bevorzugt grösser als eine Dicke des folienartigen Materials. Ausserdem kann die erste Feinstrukturierung als Teil der zweiten Feinstrukturierung ausgebildet sein, d.h. beispielsweise können auf eine Oberfläche der Ausbuchtungen Strukturelemente aufgeprägt sein. Ein weiterer wesentlicher Unterschied zwischen der ersten und zweiten Feinstrukturierung besteht dabei im Verhältnis zwischen dem ersten Abstand und zweiten Abstand. Der erste Abstand und zweiten Abstand sind verschieden, bevorzugt ist der zweite Abstand grösser als der erste Abstand, besonders bevorzugt ist der zweite Abstand mindestens doppelt so gross wie der erste Abstand. Vorteil dieser Strukturierung des folienartigen Materials in eine erste und zweite Feinstrukturierung, umfassend mehrere Strukturelemente bzw. mehrere Ausbuchtungen, ist, dass die Ausbreitung und Verteilung eines Fluids auf einer Oberfläche des folienartigen Materials begünstigt wird. Unter einem Fluid sind dabei mindestens zwei fluide Phasen zu verstehen, wobei eine fluide Phase beispielsweise eine Flüssigkeit oder ein Gas sein kann. Die erste und zweite Feinstrukturierung wirken jedoch im Wesentlichen auf die Ausbreitung der Flüssigkeit als Film auf einer Oberfläche der Packungslage.

Bei einer Prägungen der Strukturelemente oder Ausbuchtungen in einer der beschriebenen Ausführungsform, bleibt vorteilhafterweise das Material als zusätzliche Fläche für einen Stoffaustausch erhalten. Die Vertiefungen der Strukturelemente oder Ausbuchtungen funktionieren dabei anders als die Erhebungen. Während die Erhebungen das Fluid aufteilen, sammelt sich das Fluid in den Vertiefungen. Entsprechende Anpassungen der Strukturelemente oder Ausbuchtungen begünstigen auch hier die Aufteilung des Fluids bzw. ein Sammeln des Fluids, beispielsweise können die Erhebungen oder Vertiefungen in einem Bereich des folienartigen Materials anders, insbesonders stärker oder schwächer geprägt sein, als in einem anderen Bereich des folienartigen Materials etc. Insbesondere kann die erste Feinstrukturierung in einer ersten W-Form und die zweite Feinstrukturierung in einer zweiten W-Form ausgebildet sein, wobei die die erste W-Form eine räumlich andere Ausrichtung als die zweite W-Form aufweisen kann, beispielsweise kann die erste W-Form relativ zur zweiten W-Form verdreht oder translatiert sein. Ansonsten können die erste und zweite Feinstrukturierung, je nach Anwendung, unterschiedliche Grössenskalen, Richtungen oder Formen aufweisen. Vorteil ist, dass die zweite Feinstrukturierung das Fluid in grosse Strukturen zerteilt und überwiegend grossräumig querverteilt, wohingegen die erste Feinstrukturierung das Fluid feinskalig ausbreitet und das folienartige Material optimal lokal benetzt.

Die Packungslage aus folienartigem Material, das die erste und zweite Feinstrukturierung umfasst, wird zu einer strukturierten Packung, insbesondere einer Kreuzkanalpackung oder einer ähnlich strukturierten Packungen gefaltet. Die erfindungsgemässe strukturierte Packung kann für eine Kolonne vorgesehen sein, in der es zu einem Stoff- und Wärmeaustausch zwischen zwei fluide Phasen kommt. Die fluiden Phasen können beispielsweise eine flüssige und eine gasförmig Phase sein, aber auch zwei
flüssige Phasen. Liegt beispielsweise eine fluide Phase als fliessende Flüssigkeit und eine fluide Phase als Dampf- oder Gasphase vor, wird die fliessende Flüssigkeit als Rieselfilm über die strukturierte Packung geführt und, die Dampf- oder Gasphase strömt in Gegenrichtung. Die durch die strukturierte Packung zur Verfügung stehende Oberfläche muss für einen maximal ausgebildeten Austauschprozess an allen Stellen gleichmässig von der flüssigen Phase bedeckt sein.

Die Strukturelemente, insbesondere die erste Feinstrukturierung, und die Ausbuchtungen, insbesondere die zweite Feinstrukturierung, sind lochfrei ausgestaltet. Unter lochfrei ist zu verstehen, dass die Strukturierung des folienartigen Materials beispielsweise durch Prägen erfolgt und die Strukturelemente oder Ausbuchten keine Löcher, insbesondere kreisförmige Löcher sind, die beispielsweise mittels Bohrung oder Stanzen hergestellt werden. Unter lochfrei ausgestaltet ist auch zu verstehen, dass beispielsweise mittels Prägen trotzdem kleine Risse im folienartigen Material entstehen können, die aufgrund technischer Beschränkungen bei der Herstellung entstehen und nicht gezielt hergestellt werden. Bevorzugt weisen die geprägten Strukturelemente und Ausbuchtungen jedoch keine Löcher auf.

Vorteile der Packungslage sind, dass die Strukturelemente, insbesondere die erste Feinstrukturierung, und die Ausbuchtungen, insbesondere die zweite Feinstrukturierung, lochfrei mittels einer einzigen Maschine und mit wenig Stanzöl hergestellt werden können und gleichzeitig weniger Herstellungskosten und weniger Materialverlust verursachen.

In Ausgestaltung der Erfindung ist der erste Abstand vom zweiten Abstand verschieden, bevorzugt der zweite Abstand grösser als der erste Abstand, besonders bevorzugt der zweite Abstand mindestens doppelt so gross wie der erste Abstand. Vorteil ist, dass die unterschiedlichen Abstände für eine unterschiedliche Verteilung der Strukturelemente und Ausbuchtungen sorgen und eine bessere Verteilung des Fluids sowie die bessere Nutzung der vorhandenen geometrischen Fläche für den Stoffaustausch ermöglichen.

In Ausgestaltung der Erfindung ist die Packungslage lochfrei ausgestaltet. Auch hier ist unter lochfrei ist zu verstehen, dass das folienartige Material keine Löcher umfasst, die beispielsweise mittels Bohrung oder Stanzen hergestellt werden und die Strukturierung des folienartigen Materials beispielsweise durch Prägen erfolgt. Unter lochfrei ausgestaltet ist auch zu verstehen, dass beispielsweise mittels Prägen trotzdem kleine Risse im folienartigen Material entstehen können, die aufgrund technischer Beschränkungen bei der Herstellung entstehen und nicht gezielt hergestellt werden. Bevorzugt weisen die geprägten Strukturelemente und Ausbuchtungen jedoch keine Löcher auf. Somit kann vorteilhafterweise der Stanzverlust nochmals reduziert werden.

In Ausgestaltung der Erfindung sind die Strukturelemente der ersten Feinstrukturierung entlang einer ersten parallelen Kurvenschar angeordnet und die Ausbuchtungen der zweiten Feinstrukturierung entlang einer zweiten parallelen Kurvenschar angeordnet sind, wobei die erste Kurvenschar und die zweite Kurvenschar in einem Drehwinkel zueinander angeordnet sind. Die erste und die zweite parallele Kurvenschar können parallele Geraden sein aber auch mittels komplexerer Anordnungen der Strukturelemente oder Ausbuchten, beispielsweise als Kurven oder in der W-Form, ausgebildet werden. Unter dem Drehwinkel ist, wenn die erste und zweite parallele Kurvenschar beispielsweise Geraden sind, ein von einer ersten und zweiten Hauptachse der Geraden eingeschlossene Winkel λ gemeint. Bei gekrümmten Kurven entsprechen die erste und zweite Hauptachse den Tangenten im Schnittpunkt der ersten und zweiten parallelen Kurvenscharen.

Es ist aber auch möglich, dass die Strukturelemente der ersten Feinstrukturierung entlang einer ersten und einer dritten parallelen Kurvenschar angeordnet sind und die Ausbuchtungen der zweiten Feinstrukturierung entlang einer zweiten und einer vierten parallelen Kurvenschar angeordnet sind. Die erste Kurvenschar bildet dabei eine erste Hauptachse der ersten Feinstrukturierung und die zweite Kurvenschar bildet dabei eine zweite Hauptachse der zweiten Feinstrukturierung aus. Die dritte Kurvenschar bildet dabei eine erste Nebenachse der ersten Feinstrukturierung und die vierte Kurvenschar bildet dabei eine zweite Nebenachse der zweiten Feinstrukturierung aus. Sind die Kurvenscharen beispielsweise Geraden, ergeben sich für je zwei Kurvenscharen vier Winkel, von denen je zwei gegenüberliegende Winkel kongruent sind. Ein Winkel α, der dem kleineren eingeschlossenen Winkel entspricht, ist zwischen der ersten Hauptachse und der ersten Nebenachse eingeschlossen. Der grössere Winkel, auch Nebenwinkel genannt, ergibt sich dann aus der Differenz 180°-α. Analog ergibt sich ein Winkel β, der dem kleineren eingeschlossenen Winkel entspricht, der zwischen der zweiten Hauptachse und der zweiten Nebenachse eingeschlossen ist. Der grössere Winkel ergibt sich dann aus der Differenz 180°-β. Der Schnittwinkel λ entspricht dem Drehwinkel λ einem zwischen der ersten und zweiten Hauptachse eingeschlossene Winkel, der gleichzeitig dem Drehwinkel λ der ersten und zweiten Feinstrukturierung entspricht. Die Festlegung der ersten Haupt- und Nebenachse sowie der zweiten Haupt- und Nebenachse ist dabei beliebig vertauschbar. Das beschriebene Vorgehen kann auch auf eine erste und zweite Feinstrukturierung mit mehr als jeweils zwei Kurvenscharen übertragen werden. Der Drehwinkel λ liegt in einem Bereich von 0 bis 90 Grad, bevorzugt in einem Bereich von 20 bis 70 Grad. Die Winkel α und β können in einem Bereich von 10 bis 90 Grad, bevorzugt in einem Bereich von 30 bis 90 Grad liegen.

In einem besonders bevorzugten Ausführungsbeispiel können die erste und zweite Kurvenschar im übertragenen Sinne auch als ein erstes und zweites periodisches Punktegitter gesehen werden, wobei ein Punkt des ersten periodischen Punktgitters durch einen ersten Schnittpunkt zwischen der ersten Haupt- und Nebenachse definiert ist und ein Punkt des zweiten periodischen Punktgitters durch einen zweiten Schnittpunkt zwischen der zweiten Haupt- und Nebenachse definiert ist. Dabei entspricht ein erster Schnittpunkt, also ein Punkt des ersten periodischen Punktgitters einem Strukturelement und ein zweiter Schnittpunkt, also ein Punkt des zweiten periodischen Punktgitters, einer Ausbuchtung. Dabei kann sich beispielsweise für die Strukturelemente und Ausbuchtungen die W-Form ausbilden. Eine erste und zweite Elementarzelle, welche aus jeweils vier direkt benachbarten Punkten des ersten oder zweiten periodischen Punktgitters gebildet werden können, kann als ein Polygon, beispielsweise als ein Quadrat, Rechteck, Parallelogramm oder ein Trapez, ausgebildet sein. Der Winkel ϕ einer Drehung zwischen der ersten und zweiten Feinstrukturierung ergibt sich somit aus der Drehung der ersten und zweiten Elementarzelle relativ zueinander. Bei diesem Ausführungsbeispiel entspricht der Winkel ϕ dem Drehwinkel λ. Eine Translation ergibt sich aus einer Verschiebung zweier direkt benachbarter Punkte der ersten und zweiten Elementarzelle relativ zueinander. Es liegt also beispielsweise keine Translation der ersten und zweiten Feinstrukturierung vor, wenn keine Drehung vorliegt und alle Seiten der ersten und zweiten Elementarzelle deckungsgleich sind oder die Seiten der ersten und zweiten Elementarzelle ein Vielfaches voneinander sind und deckungsgleich sind. Das erste oder zweite periodische Punktgitter können aber auch nur lokal periodisch sein, beispielsweise kann auch ein Teilbereich der Packungslage mindestens ein weiteres Punktgitter aufweisen, welches zwar die gleiche Strukturelemente oder Ausbuchtungen verwendet, aber andere Abstände oder eine andere Form der Elementarzelle aufweist.

Vorteile der beschriebenen Ausgestaltungen und Ausführungsbeispiele der Anordnung der ersten und zweiten Feinstrukturierung ist eine hohe Trenneffizienz. Der Winkel ϕ, der dem Drehwinkel λ entspricht, liegt in einem Bereich von 0 bis 180 Grad, bevorzugt in einem Bereich von 0 bis 90 Grad, besonders bevorzugt in einem Bereich von 20 bis 70 Grad.

In Ausgestaltung der Erfindung ist der zweite Abstand zumindest doppelt so gross ist wie ein Längenmass einer der Ausbuchtungen. Unter einem Längenmass ist dabei, in Abhängigkeit von der Geometrie der Ausbuchtungen, ein charakteristisches Maß für die Geometrie zu verstehen, beispielsweise für kugelförmige Ausbuchtungen der Durchmesser oder eine Halbwertsbreite der Ausbuchtungen, also eine Breite auf halber Höhe zwischen dem höchsten und tiefsten Punkt einer Ausbuchtung oder für pyramidenförmige Ausbuchtungen eine maximale Breite der Grundfläche der Ausbuchtung. Das Längenmass einer Ausbuchtung kann sich über zwei benachbarte Strukturelemente erstrecken, sodass beispielsweise auf einer Oberfläche der Ausbuchtungen Strukturelemente ausgebildet sein können. Insbesondere eine Höhe der Ausbuchtung ist grösser als eine Höhe der Strukturelemente. Vorteilhafterweise weisen die Ausbuchtungen die Dimension der gröberen Strukturen, z.B. die Höhe der Rinnsale auf und verteilen somit gröbere Strömungsstrukturen besser.

In Ausgestaltung der Erfindung ist ein Strukturelement als ein konkaves Strukturelement oder ein konvexes Strukturelement ausgebildet oder eine Ausbuchtung ist als eine konkave Ausbuchtung oder eine konvexe Ausbuchtung ausgebildet. Ausserdem ist die erste Feinstrukturierung derart ausgestaltet, dass konkave Strukturelemente und konvexe Strukturelemente alternierend angeordnet sind oder die zweite Feinstrukturierung derart ausgestaltet ist, dass konkave Ausbuchtungen und konvexe Ausbuchtungen alternierend angeordnet sind.

Aufgrund der konvexen oder konkaven Geometrie der Strukturelement oder Ausbuchtungen bilden diese eine Erhebung oder Vertiefung. Eine Erhebung auf der einen Seite des folienartigen Materials entspricht dabei einer Vertiefung auf der anderen Seite des folienartigen Materials und umgekehrt. Unter einer alternierenden Anordnung kann somit verstanden werden, dass wenn auf der einen Seite des folienartigen Materials zwei benachbarte Erhebungen eine Vertiefung begrenzen, dann begrenzen auf der anderen Seite zwei Täler eine Erhebung. Ausserdem ist unter einer alternierende Anordnung zu verstehen, dass auf ein konkaves Strukturelement als direkter Nachbar immer ein konvexes Strukturelement folgt und umgekehrt. Auf eine konkave Ausbuchtung folgt als direkter Nachbar immer eine konvexe Ausbuchtung und umgekehrt.

Die Strukturelemente können mittels der Erhebungen bzw. Vertiefungen Rinnen ausbilden und beispielsweise sich kreuzende Rinnen aufweisen, die symmetrisch in Bezug auf eine Kolonnenachse angeordnet sind. Dabei kann eine Höhe der Strukturelemente, also eine Höhe der Erhebungen bzw. eine Tiefe der Vertiefungen beispielsweise grösser als die Foliendicke sein. Die erste Feinstrukturierung, welche durch die Strukturelemente ausgebildet wird, kann beispielsweise auf der Vorder- und Rückseite identisch sein. Ein Strukturelement, das auf einer Seite des folienartigen Materials als Vertiefung ausgebildet ist, kann dabei beispielsweise auf der gegenüberliegenden Seite einer Erhebung entsprechen.

Aufgrund der ersten und zweiten Feinstrukturierung können sich Rinnen zwischen den konvexen und konkaven Strukturelementen oder Ausbuchtungen bilden und das Fluid kann sich beispielsweise längs der Rinnen unter der Wirkung von Kapillar- und Gravitationskräften über die Packungslage gleichmässig verteilen. An einer Kreuzungsstelle der Rinnen kann das Fluid von der einen in die andere Rinne überströmen, so dass eine gute Quervermischung erzielt wird. Infolge eines symmetrischen Abfliessens des Fluids über die Packungslage treten ausserdem keine unerwünschten Randeffekte auf, welche den Stoff bzw. Wärmeaustausch zwischen der flüssigen und der gasförmigen Phase verschlechtern wurden.

Wie sich überraschenderweise in der Praxis gezeigt hat, weist die erfindungsgemäss ausgebildete Packungslage, die eine erste und zweite Feinstrukturierungen umfasst, auch für ein schlecht benetzendes Fluid, beispielsweise Wasser, und schlecht benetzbare Materialien, wie beispielsweise rostfreier Stahl, einen optimalen Stoff- oder Wärmeaustausch für das Fluid auf. Die konkaven Strukturelemente oder konkaven Ausbuchtungen sind mit dem Fluid gefüllt, wobei aufgrund der Oberflächenspannung die Tendenz zu einer Ansammlung im zentralen Bereich besteht. Auf einer konvexen Rückseite hat das Fluid die Tendenz sich zurückzuziehen und die Oberfläche trocken zu legen. Die erste und zweite Feinstrukturierung begünstigen somit die Ausbreitung des Fluids auf der Oberfläche des folienartigen Materials und tragen somit merklich zum Austauschprozess bei.

Erfindungsgemäss weist zumindest eine Ausbuchtung eine umlaufende Kante auf und bevorzugt weist die umlaufende Kante zumindest eine Perforation auf. Die umlaufende Kante der Ausbuchtung kann beispielsweise als eine geschlossene ringförmige Prägung, also als Erhebung mit einer Vertiefung innerhalb der geschlossenen ringförmigen Prägung ausgebildet sein. Die umlaufende Kante kann aber auch eine Perforation umfassen, wodurch vorteilhafterweise das Fluid an einer Erhebung in zwei Teilströme aufspaltet werden kann, was die Benetzung der Fläche begünstigt, wobei gleichzeitig das Material als Oberfläche erhalten bleibt. Unter einer Perforation ist eine Unterbrechung der umlaufenden Kante zu verstehen, sodass die umlaufende Kante beispielsweise keine geschlossene umlaufende Kante ist. Die Rückseite der ringförmigen Prägung funktioniert leicht unterschiedlich. Hier sammelt sich die Flüssigkeit in einer Vertiefung der geschlossenen ringförmigen Prägung und verlässt sie auf der anderen. Vorteilhafterweise begünstigt die Perforation dabei den Durchtritt der Flüssigkeit durch die umlaufende Kante in das Innere der Ausbuchtungen.

Gemäß der vorliegenden Erfindung ist der ersten und zweiten Feinstrukturierung ein Wellungsmuster überlagert und das Wellungsmuster benachbarte Strömungskanäle ausbildet. Unter dem Wellungsmuster kann eine Faltung, beispielsweise zickzackartig gefaltete Erscheinungsform, insbesondere Lamellen, verstanden werden. Das Wellungsmuster kann aus regelmässig und / oder unregelmässigen alternierenden Falten besteht. Die Falten können eine einheitliche Amplitude, also Höhe oder Tiefe und im übertragenen Sinne gleiche Wellenlänge, also einen gleichen Abstand haben. Das Wellungsmuster kann beispielsweise eine Amplitude von 4-46 mm,
insbesondere von 6,5-15 mm, und eine Wellenlänge von 7-90 mm, insbesondere von 10-37 mm, aufweisen. Der Faltungswinkel, also der Winkel zwischen der Kolonnenachse und einer Lamellenrichtung kann beispielsweise 0-60 Grad, bevorzugt 20-50 Grad und besonders bevorzugt 30-45 Grad betragen. Das Wellungsmuster bildet somit Gipfel und Täler aus, wobei die Täler auf der jeweiligen Seite des folienartigen Materials als Strömungskanäle ausgestaltet sind. Die Lamellen des Wellungsmusters können entlang einer Oberfläche der Packungslage auch einen S-förmigen Verlauf aufweisen. Unter einem S-förmigen Verlauf kann beispielsweise ein Verlauf der Lamelle verstanden werden, deren eines Lamellenende parallel zur Kolonnenachse verläuft, deren mittlerer Lamellenteil einen Winkel von 30 bis 60 Grad gegen die Kolonnenachse geneigt ist und deren anderes Lamellenende wieder parallel zur Kolonnenachse verläuft. Vorteilhafterweise kann dadurch der Druckverlust in der strukturierten Packung minimiert werden. Ein weiterer Vorteil ist, dass damit eine weitere Strukturierung der Packungslage vorhanden ist, welche einen optimalen Fluss der fluiden Phase sowie einen optimalen Stoffaustausch ermöglicht. Das Wellungsmuster hat im Wesentlichen Auswirkungen auf die Ausbreitung einer gasförmigen Phase, insbesondere eines Gases oder Dampfes.

Dieses Wellungsmuster bildet die bereits genannte Kreuzkanalstruktur aus. Dabei entspricht ein Kanal einem Tal des Wellungsmusters. Ausserdem kann das Wellungsmuster gegenüber der Vertikalen, die bevorzugt der Kolonnenachse entspricht, geneigt sein. Die Kolonnenachse ist im Betriebszustand, also wenn die Packungslage in einer strukturierten Packung und die strukturierte Packung in einem Stoffaustauschapparat eingebaut ist, beispielsweise eine Kolonne, der Vertikalen des Stoffaustauschapparates. Wellungsmuster direkt benachbarter Packungslagen, insbesondere in strukturierten Packungen, können, beispielsweise in Bezug auf die Kolonnenachse, in entgegengesetzte Richtung geneigt sein. Im Weiteren kann das Wellungsmuster die Packungslagen, beispielsweise in einer strukturierten Packung, in einem Abstand zu einander zu halten, bzw. offene Strömungskanäle für das Gas zu bilden.

In Ausgestaltung der Erfindung umfasst die Packungslage mehrere Ausnehmungen. Die Ausnehmungen sind derart ausgestaltet und angeordnet, dass sie eine dritte Feinstrukturierung bilden, wobei benachbarte Ausnehmungen einen dritten Abstand aufweisen. Der dritte Abstand vom ersten Abstand und vom zweiten Abstand verschieden ist, bevorzugt der dritte Abstand grösser als der erste und der zweite Abstand ist. Ausserdem sind die Ausnehmungen, insbesondere die dritte Feinstrukturierung, als Löcher ausgebildet.

Von Vorteil ist die Kombination der Packungslage mit Ausnehmungen, beispielsweise Löcher oder Schlitze, so dass ein Druckausgleich stattfinden kann und sich ein Gleichgewicht zwischen den Packungslagen einstellen kann. Die Ausnehmungen können sehr klein sein, bevorzugt so klein, dass sie sich mit einer Prägemaschine im gleichen Verarbeitungsschritt wie die erste und zweite Feinstrukturierung herstellen lassen. Die Ausnehmungen können auch nur auf einem Teil der Packunglage umgesetzt werden, beispielsweise nur in einem oberen und/oder mittleren Bereich der Packungslage. Die Ausnehmungen können auch am Wellungsmuster ausgerichtet sein, beispielsweise können Löcher oder Schlitze quer zum Wellungsmuster ausgerichtet sein.

Die Packungslage ist Teil der erfindungsgemässen strukturierten Packung, die eine Mehrzahl von Packungslagen, insbesondere parallele Packungslagen, umfasst, wobei benachbarte Packungslagen sich berühren und die Strömungskanäle benachbarter Packungslagen sich offen kreuzen. Zwischen benachbarten Packungslagen können auch ungefaltete Bleche eingeführt sein, die sich kreuzende Kanäle voneinander trennen. Als strukturierte Packung wird ein Mittel zum Stoffaustausch zwischen dem Fluid verstanden, das beispielsweise aus zwei fluiden Phasen besteht. Die strukturierte Packung wird in einem Stoffaustauschapparat verwendet. Der Stoffaustauschapparat kann insbesondere als eine Kolonne ausgeführt sein, welche beispielsweise für eine Absorption oder Desorption, bevorzugt für eine Rektifikation oder eine Extraktion, eingesetzt werden kann.

Bei diesen Prozessen strömt eine weniger dichte fluide Phase, beispielsweise Dampf oder ein Gas entlang der Kolonnenachse nach oben. Eine dichtere fluide Phase, beispielsweise eine Flüssigkeit, fliesst im Gegenstrom als Rieselfilm über die Oberflächen der Packungslagen nach unten und unter bestimmten Bedingungen auch als Tropfen nach unten und/oder nach oben. Zwischen der nach oben und der nach unten strömenden fluiden Phase findet ein Austausch gewisser Komponenten, beispielsweise Schwersieder und Leichtsieder, im Gemisch und ein Wärmeaustausch statt. Beispielsweise bei der Destillation wird die dichtere fluide Phase in einem Sumpf der Kolonne aufgefangen, dort zumindest zum Teil verdampft, so dass diese wieder als weniger dichte fluide Phase durch die Kolonne aufsteigt. Diese weniger dichte fluide Phase wird an einem Kopf der Kolonne mittels eines Kühlers kondensiert und kann als dichtere fluide Phase wieder nach unten strömen. Im Sumpf und am Kopf der Kolonne können Produktströme weggeführt werden, die im Sumpf einen höheren Anteil an Schwersieder am Kopf einen höheren Anteil an Leichtsieder enthalten. Ein zu bearbeitender Strom mit Leicht- und Schwersieder wird irgendwo entlang der Kolonne in die Kolonne eingeführt. Weitere Produktströme können an anderen Stellen zwischen Sumpf und Boden abgeführt werden.

Der Stoffaustauschapparat kann eine Mehrzahl von strukturierten Packungen enthalten, die übereinander angeordnet sein können und so beispielsweise ein Packungsbett bilden. Eine strukturierte Packung kann auch aus Modulen oder einzelnen Packungslagen zusammengesetzt sein. Die Module oder einzelnen Packungslagen können dabei mittels eines Abstandshalters voneinander beabstandet sein. Die strukturierte Packung kann in einer Kolonne derart angeordnet sein, dass der Stoffaustauschteil der Kolonne mit mindestens zwei übereinander angeordneten strukturierten Packungen aufgefüllt ist, wobei das Wellungsmuster aufrecht stehender Packungslagen übereinander angeordneter strukturierter Packungen gegeneinander um einen Winkel um die Kolonnenachse verdreht sein kann Ebenso können die aufrecht stehenden Packungslagen übereinander stehender strukturierter Packungen gegeneinander um einen Winkel um die Kolonnenachse verdreht sein.

Eine Oberfläche der strukturierten Packung oder der Packungslage kann beispielsweise mit Stoffen beschichtet sein, beispielsweise zum Korrosionsschutz, zur weiteren Verbesserung der Benetzbarkeit oder aber als Katalysatorschicht für chemische Reaktion.

Die Erfindung betrifft im Weiteren eine Kolonne mit einer Mehrzahl von übereinander angeordneten strukturierten Packungen und einem oder mehreren übereinander angeordneten Packungsbetten. Ausserdem können zur Herstellung einer Packungslage der erfindungsgemässen strukturierten Packung die Strukturelemente und die Ausbuchtungen in einem einzigen Fertigungsdurchgang hergestellt werden.

Ferner betrifft die vorliegende Erfindung die Verwendung der strukturierten Packung zur Durchführung eines Stoff- und/oder Wärmeaustausches zwischen einer weniger dichten fluide Phase und einer dichteren fluiden Phase in einem Stoffaustauschapparat, insbesondere in einer Kolonne, wobei die weniger dichte fluide Phase nach oben strömt und die dichtere fluide Phase nach unten strömt. Der Stoffaustauschapparat enthält eine strukturierte Packung und diese strukturierte Packung umfasst die Packungslage. Die dichtere Phase fliesst mindestens teilweise als Film über die Packungslage.

Weitere Vorteile, Merkmale und Einzelheiten der Erfindung ergeben sich aus den abhängigen Ansprüchen sowie anhand der Beschreibung der Ausführungsbeispiele und der Zeichnungen.

Im Folgenden wird die Erfindung in apparativer und verfahrenstechnischer Hinsicht anhand von Ausführungsbeispielen unter Bezugnahme auf die Zeichnungen näher erläutert. In der schematischen Zeichnung zeigen:
- Fig. 1: eine erfindungsgemässe Packungslage mit einer ersten und zweiten Feinstrukturierung nach einem ersten Ausführungsbeispiel,
- Fig. 2a: eine erfindungsgemässe Packungslage mit einer zweiten Feinstrukturierung mit Ausbuchtungen,
- Fig. 2b: eine erfindungsgemässe Packungslage mit einer ersten Feinstrukturierung mit Strukturelementen,
- Fig. 2c: eine erfindungsgemässe Packungslage mit der ersten Feinstrukturierung mit Rillen als Strukturelemente,
- Fig. 3a: eine erfindungsgemässe Packungslage mit einer schematischen Darstellung der ersten und zweiten Feinstrukturierung nach einem zweiten Ausführungsbeispiel,
- Fig. 3b: eine erfindungsgemässe Packungslage mit einer schematischen Darstellung der ersten und zweiten Feinstrukturierung als parallele Kurvenscharen,
- Fig. 4a: eine schematischen Darstellung der ersten und dritten Kurvenschar der ersten Feinstrukturierung sowie deren Schnittwinkel α,
- Fig. 4b: eine schematischen Darstellung der zweiten und vierten Kurvenschar der zweiten Feinstrukturierung sowie deren Schnittwinkel β,
- Fig. 4c: eine schematischen Darstellung der ersten Hauptachse der ersten Feinstrukturierung und der zweiten Hauptachse der zweiten Feinstrukturierung sowie des Drehwinkels λ,
- Fig. 5: eine Schnitt durch eine erfindungsgemässe Packungslage mit schematischen Darstellungen der ersten und zweiten Feinstrukturierung gemäss einem dritten Ausführungsbeispiels der Erfindung,
- Fig. 6a: eine schematischen Darstellung einer ersten Elementarzelle der ersten Feinstrukturierung in einem ersten Punktgitter,
- Fig. 6b: eine schematischen Darstellung einer zweiten Elementarzelle der zweiten Feinstrukturierung in einem zweiten Punktgitter,
- Fig. 6c: eine schematischen Darstellung der ersten Elementarzelle und der zweiten Elementarzelle und dem eingeschlossenen Winkel ϕ,
- Fig. 7A - 7F: Ausführungsvarianten der Ausbuchtungen der zweiten Feinstrukturierung,
- Fig. 8: eine schematische Darstellung einer Kolonne mit einer strukturierten Packung und einer erfindungsgemässen Packungslage.
- Fig. 9: mehrere erfindungsgemässe Packungslagen nach einem vierten Ausführungsbeispiel,

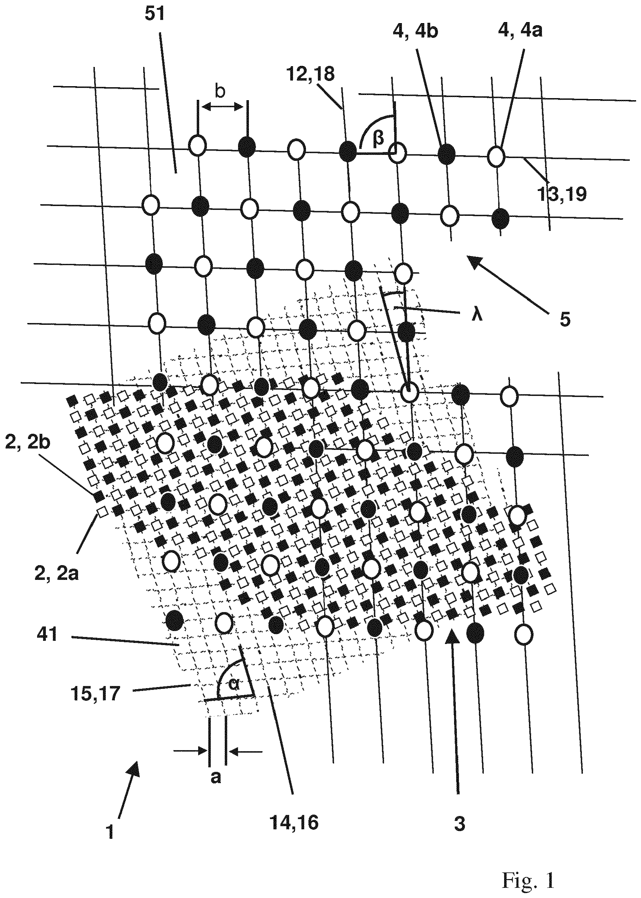

Fig. 1 zeigt eine erfindungsgemässe Packungslage 1 mit einer ersten Feinstrukturierung 3 und einer zweiten Feinstrukturierung 5 nach einem ersten Ausführungsbeispiel. Dabei befinden sich die erste Feinstrukturierung und die zweite Feinstrukturierung am gleichen Ort. Die erste Feinstrukturierung 3 wird aus mehreren Strukturelementen 2 ausgebildet, wobei die konvexen Strukturelemente 2b die konkaven Strukturelemente 2a eine pyramidenförmige Geometrie aufweisen. Benachbarte Strukturelemente weisen einen ersten Abstand a auf, wobei der erste Abstand a dem Abstand der geometrischen Schwerpunkte zweier direkt benachbarter Strukturelemente 2 entspricht. Fig. 1 zeigt im Weiteren die zweite Feinstrukturierung 5, die aus mehreren Ausbuchtungen 4 ausgebildet wird und die ebenfalls konvexen Ausbuchtungen 4b und konkave Ausbuchtungen 4a sowie eine annähernd zylinderförmige Geometrie aufweisen. Benachbarte Ausbuchtungen weisen einen zweiten Abstand b auf, wobei der zweite Abstand b dem Abstand der geometrischen Schwerpunkte zweier direkt benachbarter Ausbuchtungen 4 entspricht.

Ausserdem bilden die erste und zweite Feinstruktur 3, 5 ein erstes und zweites Punktgitter aus. Ein Punkt des ersten Punktgitters entspricht einem Strukturelement 2, wobei vier direkt benachbarte Strukturelemente 2 eine erste Elementarzelle 41 ausbilden. Ebenso entspricht ein Punkt des zweiten Punktgitters einer Ausbuchtung 4, wobei vier direkt benachbarte Ausbuchtungen 4 eine zweite Elementarzelle 51 ausbilden. In dieser schematischen Darstellung haben die erste Elementarzelle 41 und die zweite Elementarzelle 51 eine rechteckige bzw. parallelogrammförmige Grundfläche und die erste und zweite Elementarzellen 41, 51 sind relativ zueinander um einen Drehwinkel λ gedreht, wodurch sich eine Drehung der ersten und zweiten Feinstrukturierung 3, 5 ergibt.

In der schematischen Darstellung der Fig.1 sind auch eine erste parallele Kurvenschar 14, eine dritten parallele Kurvenschar 15 sowie eine zweite parallele Kurvenschar 12 und eine vierte parallele Kurvenschar 13 gezeigt. Die erste Kurvenschar 14 bildet dabei eine erste Hauptachse 16 und die dritte Kurvenschar 15 eine erste Nebenachse 17 der ersten Feinstrukturierung 3. Ebenso bildet die zweite Kurvenschar 12 eine zweite Hauptachse 18 der zweiten Feinstrukturierung 5 und die vierte Kurvenschar 13 eine zweite Nebenachse 19 der zweiten Feinstrukturierung 5. Die Strukturelemente 2 sind jeweils entlang einer Geraden der ersten und dritten parallelen Kurvenschar 14, 15 angeordnet. Zwischen der ersten Hauptachse 16 und der ersten Nebenachse 17 ist ein Winkel α eingeschlossen, der dem kleineren eingeschlossenen Winkel an einem Schnittpunkt der ersten und dritten parallelen Kurvenschar entspricht. Auch die Ausbuchtungen 4 sind jeweils entlang einer Geraden der zweiten und vierten parallelen Kurvenschar 12, 13 angeordnet. Der Winkel β, der einem kleineren eingeschlossenen Winkel entspricht, ist zwischen der ersten Hauptachse 18 und der ersten Nebenachse 19 eingeschlossen. Der zwischen der ersten und zweiten Hauptachse eingeschlossenen kleineren Schnittwinkel λ entspricht dem Drehwinkel λ der ersten und zweiten Feinstrukturierung 3, 5.

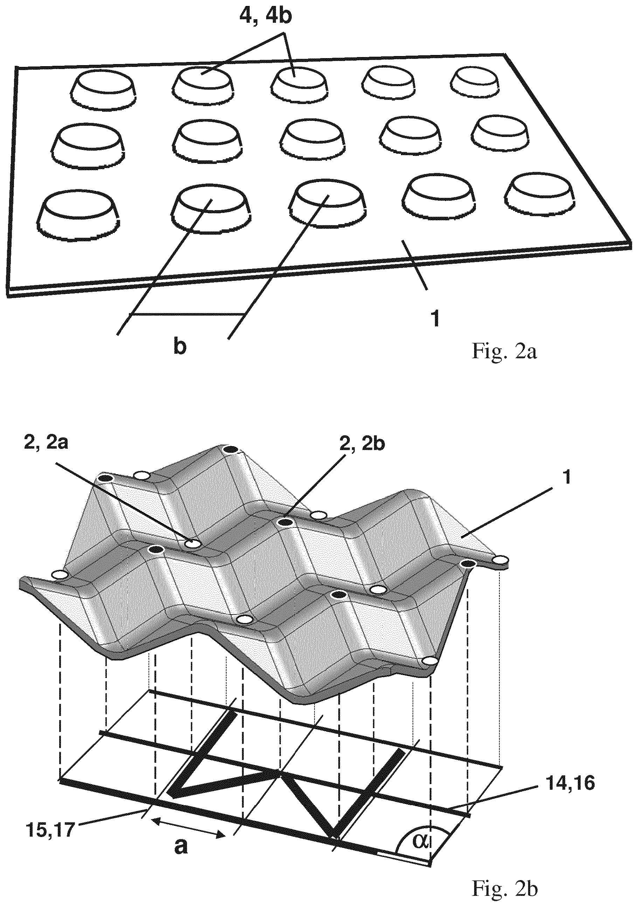

Fig. 2a zeigt eine erfindungsgemässe Packungslage 1 mit einer zweiten Feinstrukturierung 5 und Ausbuchtungen 4 gemäss Fig. 1. Die Ausbuchtungen 4 sind konvexe Ausbuchtungen 4b, können aber auch eine konkave Geometrie, also konkave Ausbuchtungen (nicht dargestellt), haben. Die Ausbuchtungen 4 sind in Fig. 2a also nur in eine Richtung des folienartigen Materials als Erhebungen ausgebildet. Benachbarte Ausbuchtungen 4 weisen einen zweiten Abstand b auf.

Fig. 2b zeigt eine erfindungsgemässe Packungslage 1 mit einer ersten Feinstrukturierung 3 und Strukturelementen 2 gemäss Fig. 1. Die Strukturelemente 2 mit konkaven Strukturelementen 2a und konvexen Strukturelementen 2b sind derart ausgestaltet und angeordnet, dass diese die erste Feinstrukturierung 3 ausbilden. Benachbarte Strukturelemente 2 weisen, wie in der Projektion dargestellt, einen ersten Abstand a auf. Die erste parallele Kurvenschar 14 und die dritte parallele Kurvenschar 15, die die erste Hauptachse 16 und die erste Nebenachse 17 der ersten Feinstrukturierung 3 ausbilden schliessen den Winkel α. Ausserdem ist in der Projektion schematisch die W-Form der Strukturelemente gezeigt.

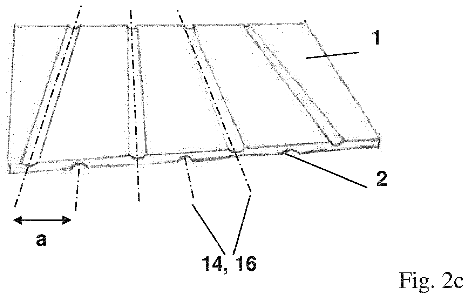

Fig. 2c eine erfindungsgemässe Packungslage 1 mit der ersten Feinstrukturierung 3 mit Strukturelemente 2, wobei die Strukturelemente 2 Rillen sind. Der Abstand zwischen den Strukturelementen 2 entspricht dem ersten Abstand a. Die Strukturelementen 2 sind entlang der ersten parallelen Kurvenschar 14 ausgerichtet, die auch gleichzeitig die erste Hauptachse 16 ausbildet.

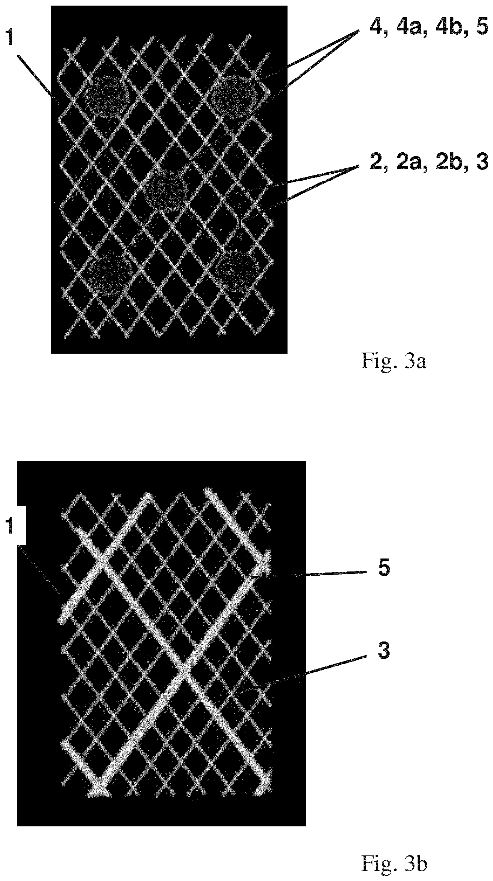

Fig. 3a zeigt eine erfindungsgemässe Packungslage 1 mit einer ersten und zweiten Feinstrukturierung 3, 5 nach einem zweiten Ausführungsbeispiel.

Dabei befinden sich die erste Feinstrukturierung und die zweite Feinstrukturierung am gleichen Ort. Dabei sind fünf Ausbuchtungen 4 in einer W-Form (schematisch angedeutet in einer gestrichelten Linie) angeordnet, welche eine Grundstruktur der zweiten Feinstrukturierung bildet. Die Ausbuchtungen 4 sind konkave und konvexe Ausbuchtungen 4a, 4b, die alternierend angeordnet sind. Die Ausbuchtungen 4 können aber auch nur konkave Ausbuchtungen 4a oder nur konvexe Ausbuchtungen 4b oder unregelmässig abwechselnde konkave und konvexe Ausbuchtungen 4a, 4b, also Erhebungen oder Vertiefungen sein. Zusätzlich ist eine erste Feinstrukturierung 3 zu sehen, die ebenfalls durch fünf Strukturelemente 3, die in einer W-Form (nicht dargestellt) angeordnet sind, ausgebildet ist. In diesem bevorzugten zweiten Ausführungsbeispiel bilden die Strukturelemente 2 der ersten Feinstrukturierung 3 und die Ausbuchtungen 4 der zweiten Feinstrukturierung 5 im übertragenen Sinne, ein erstes und zweites periodisches Punktegitter aus. Dabei entspricht ein Punkt des ersten periodischen Punktgitters einem Strukturelement 2 und ein Punkt des zweiten periodischen Punktgitters einer Ausbuchtung 4.

Fig. 3b zeigt eine erfindungsgemässe Packungslage 1 mit einer schematischen Darstellung der ersten und zweiten Feinstrukturierung 3,5 als Punktgitter gemäss Fig. 3a. Dabei werden eine erste Elementarzelle 41, welche aus jeweils vier direkt benachbarten Punkten der ersten Feinstrukturierung 3 ausgebildet wird, und eine zweite Elementarzelle 51 gezeigt, welche aus jeweils vier direkt benachbarten Punkten der zweiten Feinstrukturierung 5 ausgebildet wird. Die erste und zweite Elementarzelle 41, 51, haben eine parallelogrammförmige Grundfläche.

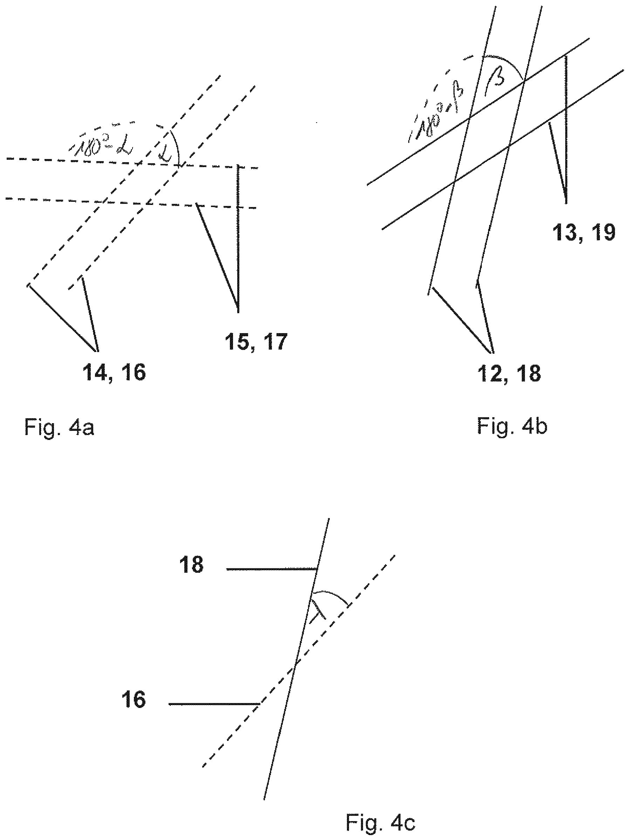

Fig. 4a zeigt eine schematischen Darstellung einer ersten parallelen Kurvenschar 14 und einer dritten parallelen Kurvenschar 15 der ersten Feinstrukturierung 3 sowie deren Schnittwinkel α. Die erste Kurvenschar 14 bildet dabei eine erste Hauptachse 16 der ersten Feinstrukturierung und die dritte Kurvenschar 15 eine erste Nebenachse 17 der ersten Feinstrukturierung 3. Die Strukturelemente (nicht dargestellt) sind jeweils entlang einer Geraden der ersten und dritten parallelen Kurvenschar 14, 15 angeordnet. Es ergeben sich für je zwei Kurvenscharen vier Winkel, von denen je zwei gegenüberliegende Winkel kongruent sind. Ein Winkel α, der einem kleineren eingeschlossenen Winkel entspricht, ist zwischen der ersten Hauptachse 16 und der ersten Nebenachse 17 eingeschlossen. Ein grösserer Winkel, auch Nebenwinkel genannt, ergibt sich dann aus der Differenz 180°- α.

Fig. 4b zeigt eine schematische Darstellung einer zweiten parallelen Kurvenschar 12 und einer vierten parallelen Kurvenschar 13 der zweiten Feinstrukturierung 5 sowie ein Winkel β. Die zweite Kurvenschar 12 bildet dabei eine zweite Hauptachse 18 der zweiten Feinstrukturierung 5 und die vierte Kurvenschar 13 eine zweite Nebenachse 19 der zweiten Feinstrukturierung 5. Die Ausbuchtungen (nicht dargestellt) sind jeweils entlang einer Geraden der zweiten und vierten parallelen Kurvenschar 12, 13 angeordnet. Es ergeben sich für je zwei Kurvenscharen vier Winkel, von denen je zwei gegenüberliegende Winkel kongruent sind. Der Winkel β, der einem kleineren eingeschlossenen Winkel entspricht, ist zwischen der ersten Hauptachse 18 und der ersten Nebenachse 19 eingeschlossen. Ein grösserer Winkel, auch Nebenwinkel genannt, ergibt sich dann aus der Differenz 180°-β.

Fig. 4c zeigt eine schematische Darstellung der ersten Hauptachse 16 der ersten Feinstrukturierung 3 und der zweiten Hauptachse 18 der zweiten Feinstrukturierung 5 sowie des Drehwinkels λ. Der dem zwischen der ersten und zweiten Hauptachse 16, 18 eingeschlossenen kleineren Schnittwinkel λ entspricht dem Drehwinkel λ der ersten und zweiten Feinstrukturierung 3, 5.

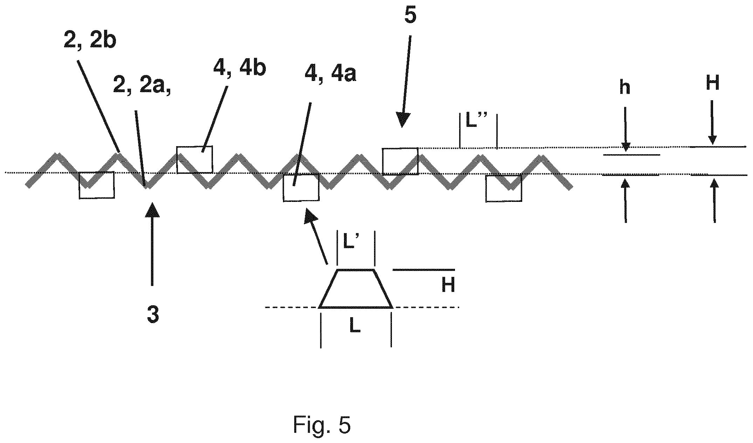

Fig. 5 zeigt eine Schnitt durch eine erfindungsgemässe Packungslage 1 mit schematischen Darstellungen der ersten und zweiten Feinstrukturierung 3,5 gemäss einem dritten Ausführungsbeispiel der Erfindung. Dabei befinden sich die erste Feinstrukturierung und die zweite Feinstrukturierung am gleichen Ort. Dargestellt sind die erste und zweite Feinstrukturierung 3,5 mit den jeweiligen Strukturelementen 2, 2a, 2b und den Ausbuchtungen 4, 4a, 4b. Es sind sowohl konkave Strukturelemente 2a und Ausbuchtungen 4a, als auch konvexe Strukturelemente 2b und Ausbuchtungen 4b dargestellt. Die Strukturelemente 2 und die Ausbuchtungen 4 sind lochfrei ausgestaltet. In Fig. 5 sind die Ausbuchtungen 4 im Wesentlichen ringförmig und hauptsächlich als ein geschlossener Vollzylinder ausgebildet. Die Ausbuchtungen 4 können aber auch ringförmig ausgebildet sein und einen offenen Zylinder ausbilden oder aber auch ringförmig als geschlossener Vollzylinder ausgebildet sein (nicht dargestellt). Im Weiteren sind die Längenmasse L, L' der Ausbuchtungen 4 sowie das Längemass L" der Strukturelemente 2 sowie die Höhe H der Ausbuchtungen und die Höhe h der Strukturelemente gezeigt.

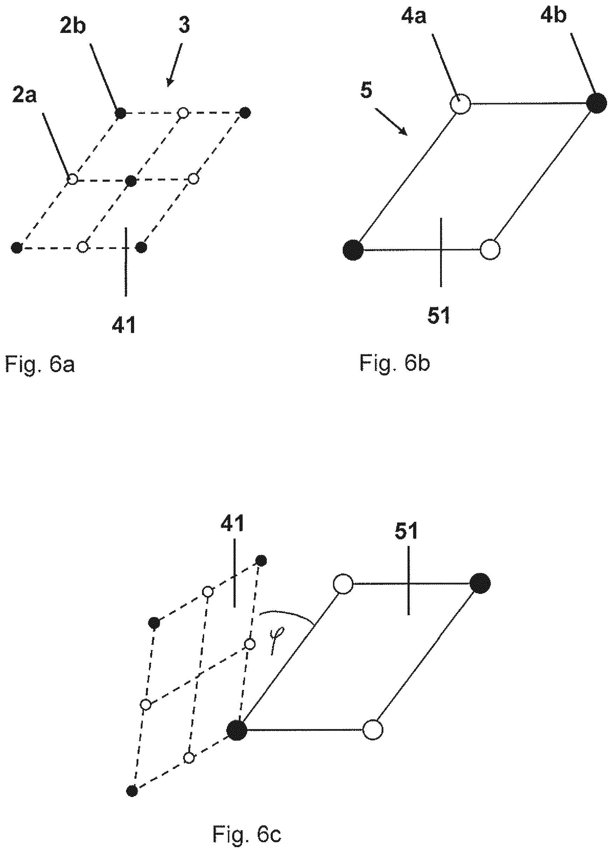

In Fig. 6a ist eine erste Elementarzelle 41 der ersten Feinstrukturierung 3 in einem ersten Punktgitter schematisch gezeigt. Es sind sowohl konkave Strukturelemente 2a, als auch konvexe Strukturelemente 2b dargestellt. Fig. 6b zeigt die analoge schematische Darstellung einer zweiten Elementarzelle 51 in einem zweiten Punktgitter der zweiten Feinstrukturierung 5. Auch hier sind sowohl konkave Ausbuchtungen 4a, als auch konvexe Ausbuchtungen 4b dargestellt. In Fig. 6c ist schematischen der von der ersten Elementarzelle 41 und der zweiten Elementarzelle 51 eingeschlossenen Winkel ϕ gezeigt. In dieser schematischen Darstellung haben die erste Elementarzelle und die zweite Elementarzelle 51 eine parallelogrammförmige Grundfläche und die erste und zweite Elementarzellen 41, 51 sind relativ zueinander um den Drehwinkel ϕ gedreht, wodurch sich eine Drehung der ersten und zweiten Feinstrukturierung 3, 5 ergibt.

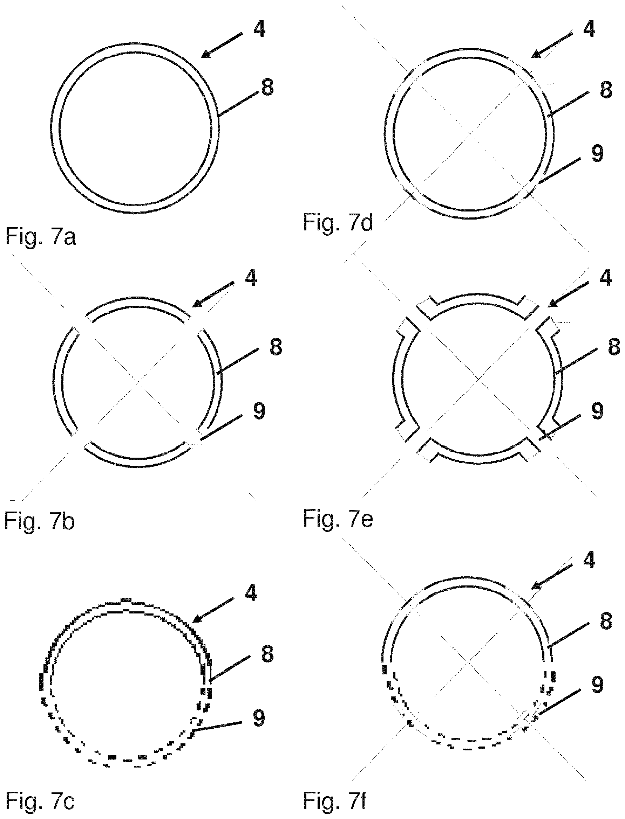

Fig. 7a kann nach einem der Ausführungsbeispiele gemäss Fig. 5 ausgebildet sein. Fig. 7b zeigt eine Ausbuchtung 4, die eine umlaufende Kante 8 aufweist, wobei die umlaufende Kante 8 mehrere Perforationen 9 aufweist.

Fig. 7c zeigt eine Ausbuchtung 4, die sich teilweise auf der Vorderseite, teilweise auf der Rückseite der Packungslage 1 befindet. Fig. 7d zeigt eine Ausbuchtung 4 mit schlitzförmigen Perforationen. Fig. 7e zeigt eine Ausbuchtung 4 mit Perforationen und an die Perforationen angrenzenden Vorsprüngen. Fig. 7f zeigt eine Ausbuchtung 4, die von schlitzförmigen Perforationen aufweist und sich teilweise auf der Vorderseite, teilweise auf der Rückseite der Packungslage 1 befindet.

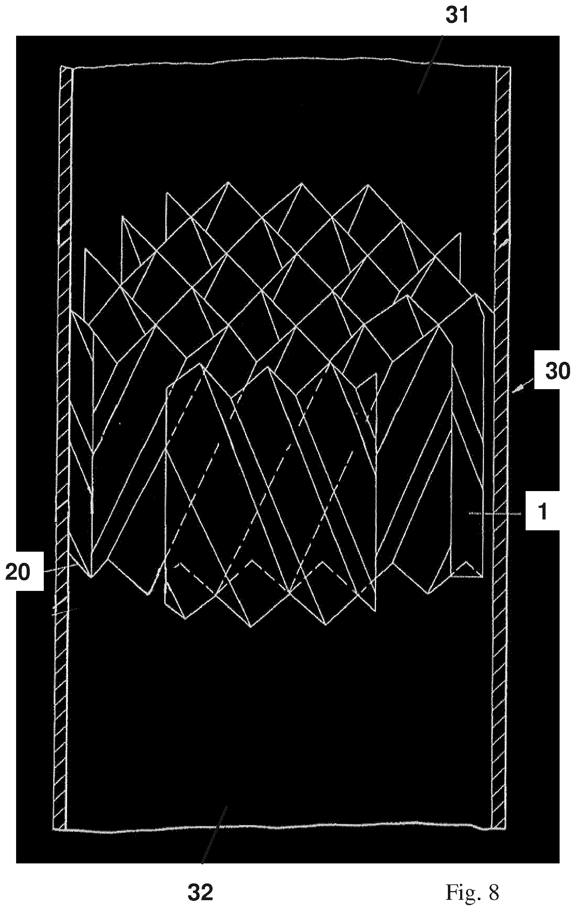

Fig. 8 zeigt eine Kolonne 30 umfassend einige Lagen einer strukturierten Packung 20, welche eine strukturierte Packung ausbilden und die wiederum mehrere Packungslagen 1 umfassen. Die strukturierte Packung 20 besteht aus einer Mehrzahl von Packungslagen 1, die zueinander in einer sich regelmässig wiederholenden geometrischen Beziehung stehen. Als Beispiel für diese geometrische Beziehung kann der Abstand benachbarter Packungslagen 1 gewählt werden. Gemäss der geometrischen Beziehung können die Abstände benachbarter Packungslagen 1 voneinander periodisch denselben Wert annehmen, sodass aus der Summe der Packungslagen 1 eine Struktur entsteht, die durch gleiche oder zumindest periodisch gleiche Abstände gekennzeichnet ist. Die Periodizität findet sich in der gesamten strukturierten Packung 20, wodurch die strukturierte Packung 20 eine regelmässige Struktur erhält. Insbesondere kann die Struktur als wellenartiges Profil ausgebildet sein.

Im Unterschied dazu bestehen Schüttfüllkörperpackungen aus Schüttfüllkörpern, das heisst aus Elementen von gleichem geometrischen Aufbau, wobei aber jeder Schüttfüllkörper zu benachbarten Schüttfüllkörpern beliebige Abstände und Orientierungen aufweisen kann, somit eine Periodizität dieser Abstände nicht erkennbar ist. Die Schüttfüllkörper werden als Schüttung in die Kolonne eingebracht. Sie bilden ein Haufwerk auf einem Kolonnenboden aus. Das Haufwerk ist gekennzeichnet durch die zufällige Anordnung der einzelnen Schüttfüllkörper.

Die Packungslagen 1 bestehen aus dünnwandigen Elementen, die ein wellenartiges Profil aufweisen. Das wellenartige Profil ist gekennzeichnet durch eine sich periodisch wiederholende Folge von Erhebungen, also Wellenbergen und talartigen Senken, also Wellentälern. Dieses wellenartige Profil kann insbesondere als Faltung mit einem Zick-Zackprofil mit spitz zulaufenden Kanten ausgebildet sein. Die Packungslagen werden so zueinander angeordnet, dass die wellenartigen Profile von zwei benachbarten Packungslagen in einem Winkel zu der Hauptströmungsrichtung geneigt sind. Die wellenartigen Profile benachbarter Packungslagen 1 sind zueinander kreuzweise angeordnet.

Für zwei benachbarte Packungslagen 1 der strukturierten Packung 20 gemäss Fig. 8 gilt folgendes: Eine erste Packungslage ist benachbart zu einer zweiten Packungslage angeordnet. Die erste Packungslage und die zweite Packungslage umfassen ein folienartiges Material aus Blech oder Metallgewebe, alternativ dazu aber auch folienartiges Material aus Kunststoff oder Keramik. Das folienartige Material kann dabei die gesamte Packungslage umfassen, oder aber auch nur einen Teil derselben bilden. Das folienartige Material kann die Form einer Platte aufweisen, die ein wellenartiges Profil, insbesondere ein zick-zack Profil oder ein wellenartiges Profil mit gerundeten Spitzen und Talgründen umfasst. Das folienartige Material kann Beschichtungen aus Kunststoffen oder Keramik aufweisen, um die Beständigkeit der Packungslage gegen chemische Einflüsse, wie beispielsweise Korrosion oder thermische Einflüsse, wie beispielsweise Temperatur, oder mechanische Einflüsse, wie beispielsweise Druck, beständiger zu machen oder die Benetzbarkeit zu verbessern.

Die Packungslagen 1 in der Fig. 8 sind in einer Ansicht dargestellt, welche einen Ausschnitt aus einer ersten Oberfläche der strukturierten Packung 20 zeigt. Die erste Oberfläche der strukturierten Packung 20 ist im Wesentlichen normal zur Hauptströmungsrichtung angeordnet. Mit Hauptströmungsrichtung wird die Strömungsrichtung bezeichnet, in welcher ein leichter flüchtiges Fluid, insbesondere ein Gas in der Kolonne ohne Einbauten nach oben, also in Richtung eines Kopfes 31 der Kolonne 30, strömt. Alternativ dazu kann als Hauptströmungsrichtung auch die entgegengesetzte Richtung definiert werden. In diesem Fall entspricht die Hauptströmungsrichtung der Richtung, in die ein schwerer flüchtiges Fluid, das heisst zumeist eine Flüssigkeit die Kolonne ohne Einbauten, also im freien Fall in Richtung eines Fusses 32 der Kolonne 30, durchströmt. In der strukturierten Packung 20 weicht die Strömungsrichtung lokal von der Hauptströmungsrichtung ab, da die Strömung durch die Packungslagen 1 der strukturierten Packung umgelenkt wird.

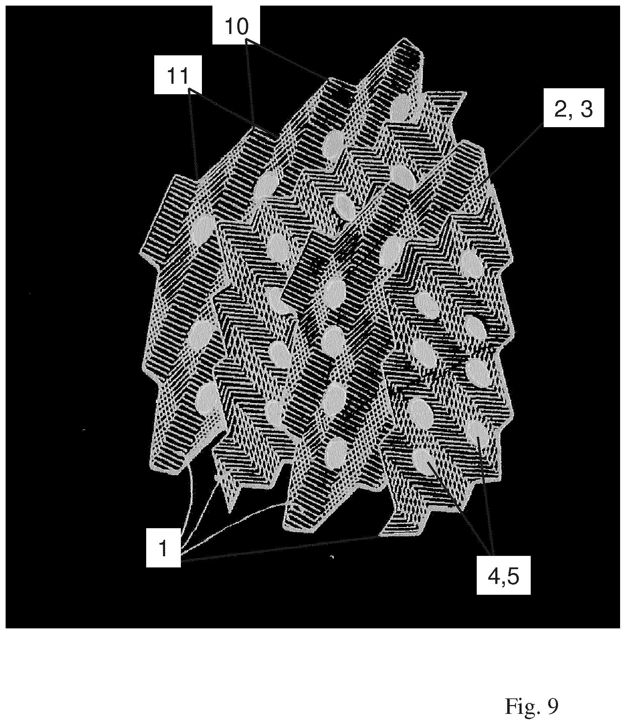

Die Packungslagen 1 der strukturierten Packung 20 weisen ein wellenartiges Profil auf, wobei durch das wellenartige Profil eine Mehrzahl offener Kanäle, die Strömungskanäle 11 (siehe Fig. 9) ausgebildet ist. Die Strömungskanäle 11 umfassen ein erstes Wellental, einen ersten Wellenberg und einen zweiten Wellenberg. Der erste Wellenberg und der zweite Wellenberg begrenzen das erste Wellental. Der erste Wellenberg und der zweite Wellenberg weisen einen ersten Scheitel und einen zweiten Scheitel auf. Das erste Wellental weist einen Talgrund auf. Zumindest ein Teil der Scheitel kann als Kante ausgebildet sein. Zumindest ein Teil der Wellentäler kann v-förmig ausgebildet sein. Ein Normalabstand zwischen Talgrund und Scheitel ist für alle Wellenberge der Lage im Wesentlichen gleich.

Fig. 9 zeigt mehrere erfindungsgemässe Packungslagen nach einem vierten Ausführungsbeispiel. Die Packungslage 1 umfasst mehrere Strukturelemente 2 und mehrere Ausbuchtungen 4, die derart ausgestaltet und angeordnet, dass sie eine erste Feinstrukturierung 3 und eine zweite Feinstrukturierung 5 ausbilden. Die erste und zweite Feinstrukturierung erstrecken sich von einem unteren Ende der Packungslage 1 zu einem oberen Ende der Packungslage 1 oder zu einer dem unteren Ende oder dem oberen Ende benachbarten Seitenkante. Die Strukturelement 2 sind dabei als konkaves Strukturelement 2a oder konvexes Strukturelement 2b ausgebildet. Ebenso sind die Ausbuchtung 4 als eine konkave Ausbuchtung 4a oder eine konvexe Ausbuchtung 4b ausgebildet. Der in Fig. 1 dargestellten Packungslagen mit der ersten und zweiten Feinstrukturierung 3, 5 ist ein Wellungsmuster 10 überlagert. Das Wellungsmuster 10 weist Lamellen mit mehreren Gipfeln und Tälern auf, wobei die Täler des Wellungsmusters 10 als benachbarte Strömungskanäle 11 ausgestaltet sind. Die Packungslagen 1 sind in der Reihenfolge dargestellt, in der diese aneinandergereiht bzw. aufeinandergelegt und zu einer strukturierten Packung 20 vereinigt und in ein Packungsbett einer Kolonne 30 eingeschoben werden. Das Packungsbett besteht in der Regel aus mehreren strukturierten Packungen 20, die übereinander gestellt werden. Dabei können aufeinander folgende strukturierte Packungen 20 um einen Winkel (z.B. 90°) um die Kolonnenachse versetzt sein.

## Patentansprüche

1. Strukturierte Packung (20), die eine Mehrzahl von Packungslagen (1) umfasst, wobei benachbarte Packungslagen (1) sich berühren und die Strömungskanäle (11) benachbarter Packungslagen (1) sich offen kreuzen, wobei mindestens eine Packungslage (1) mehrere Strukturelemente (2) umfasst und die Strukturelemente (2) derart ausgestaltet und angeordnet sind, dass sie eine erste Feinstrukturierung (3) bilden, und wobei benachbarte Strukturelemente (2) einen ersten Abstand (a) aufweisen, wobei die Packungslage (1) mehrere Ausbuchtungen (4) wobei zumindest eine Ausbuchtung (4) eine umlaufende Kante (8) aufweist, umfasst, die derart ausgestaltet und angeordnet sind, dass sie eine zweite Feinstrukturierung (5) bilden, und wobei benachbarte Ausbuchtungen (4) einen zweiten Abstand (b) aufweisen, wobei die Strukturelemente (2) und die Ausbuchtungen (4) lochfrei ausgestaltet sind, der ersten und zweiten Feinstrukturierung (3, 5) ein Wellungsmuster (10) überlagert ist und das Wellungsmuster (10) benachbarte Strömungskanäle (11) ausbildet.

2. Strukturierte Packung (20) nach Anspruch 1, wobei der erste Abstand (a) vom zweiten Abstand (b) verschieden ist, bevorzugt der zweite Abstand (b) grösser als der erste Abstand (a) ist, besonders bevorzugt der zweite Abstand (b) mindestens doppelt so groß ist wie der erste Abstand (a).

3. Strukturierte Packung (20) nach Anspruch 1 oder 2, wobei die Packungslage (1) lochfrei ausgestaltet ist.

4. Strukturierte Packung (20) nach einem der vorangehenden Ansprüche, wobei die Strukturelemente (2) der ersten Feinstrukturierung entlang (3) einer ersten parallelen Kurvenschar angeordnet sind und die Ausbuchtungen (4) der zweiten Feinstrukturierung (5) entlang einer zweiten parallelen Kurvenschar angeordnet sind, wobei die erste Kurvenschar und die zweite Kurvenschar in einem Drehwinkel λ zueinander angeordnet sind.

5. Strukturierte Packung (20) nach einem der vorangehenden Ansprüche, wobei der zweite Abstand (b) zumindest doppelt so groß ist wie ein Längenmass einer der Ausbuchtungen (4).

6. Strukturierte Packung (20) nach einem der vorangehenden Ansprüche, wobei ein Strukturelement (2) als ein konkaves Strukturelement (2a) oder ein konvexes Strukturelement (2b) ausgebildet ist oder eine Ausbuchtung (4) als eine konkave Ausbuchtung (4a) oder eine konvexe Ausbuchtung (4b) ausgebildet ist.

7. Strukturierte Packung (20) nach Anspruch 6, wobei die erste Feinstrukturierung (3) derart ausgestaltet ist, dass konkave Strukturelemente (2a) und konvexe Strukturelemente (2b) alternierend angeordnet sind oder die zweite Feinstrukturierung (5) derart ausgestaltet ist, dass konkave Ausbuchtungen (4a) und konvexe Ausbuchtungen (4b) alternierend angeordnet sind.

8. Strukturierte Packung (20) nach einem der vorhergehenden Ansprüche, wobei die umlaufende Kante (8) zumindest eine Perforation (9) aufweist.

9. Strukturierte Packung (20) nach einem der vorhergehenden Ansprüche, wobei die Packungslage (1) mehrere Ausnehmungen umfasst und die Ausnehmungen derart ausgestaltet und angeordnet sind, dass sie eine dritte Feinstrukturierung bilden, wobei benachbarte Ausnehmungen einen dritten Abstand aufweisen.

10. Strukturierte Packung (20) nach Anspruch 9, wobei der dritte Abstand vom ersten Abstand (a) und vom zweiten Abstand (b) verschieden ist, bevorzugt der dritte Abstand grösser als der erste und der zweite Abstand (a, b) ist.

11. Strukturierte Packung (20) nach Anspruch 9 oder 10, wobei die Ausnehmungen, bevorzugt die dritte Feinstrukturierung, als Löcher ausgebildet sind.

12. Strukturierte Packung (20) nach einem der vorhergehenden Ansprüche, die eine Mehrzahl von parallelen Packungslagen (1) umfasst.

13. Kolonne (30) mit einer Mehrzahl von übereinander angeordneten strukturierten Packungen (20), von denen mindestens eine gemäß einem der Ansprüche 1 bis 12 ausgestaltet ist.

14. Verwendung einer strukturierten Packung nach einem der Ansprüche 1 bis 12 zur Durchführung eines Stoff- und/oder Wärmeaustausches zwischen einer weniger dichten fluide Phase und einer dichteren fluiden Phase in einem Stoffaustauschapparat, insbesondere in einer Kolonne, wobei die weniger dichte fluide Phase nach oben strömt und die dichtere fluide Phase nach unten strömt, wobei der Stoffaustauschapparat eine strukturierte Packung enthält und diese strukturierte Packung die Packungslage umfasst, und die dichtere Phase mindestens teilweise als Film über die Packungslage fließt.

## Claims

1. A structured package (20), comprising a plurality of package layers (1), wherein adjacent package layers (1) are in contact with each other and the flow channels (11) of adjacent package layers (1) often intersect in an open manner, wherein at least one package layer (1) comprises a plurality of structural elements (2) and the structural elements (2) are designed and arranged so as to form a first fine structuring (3), and wherein adjacent structural elements (2) have a first spacing (a), wherein the package layer (1) comprises a plurality of bulges (4), wherein at least one bulge (4) has a circumferential edge (8), which are designed and arranged so as to form a second fine structuring (5), and wherein adjacent bulges (4) have a second spacing (b), wherein the structural elements (2) and the bulges (4) are designed without holes, a corrugation pattern (10) is superimposed on the first and the second fine structuring (3, 5), and the corrugation pattern (10) forms adjacent flow channels (11).

2. The structured package (20) according to claim 1, wherein the first spacing (a) is different from the second spacing (b), preferably the second spacing (b) is larger than the first spacing (a), particularly preferably the second spacing (b) is at least twice as large as the first spacing (a).

3. The structured package (20) according to claim 1 or 2, wherein the package layer (1) is designed without holes.

4. The structured package (20) according to one of the preceding claims, wherein the structural elements (2) of the first fine structuring (3) are arranged along a first parallel set of curves and the bulges (4) of the second fine structuring (5) are arranged along a second parallel set of curves, the first set of curves and the second set of curves being arranged relative to one another at an angle of rotation λ.

5. The structured package (20) according to one of the preceding claims, wherein the second spacing (b) is at least twice as large as a longitudinal dimension of one of the bulges (4).

6. The structured package (20) according to one of the preceding claims, wherein a structural element (2) is formed as a concave structural element (2a) or a convex structural element (2b), or wherein a bulge (4) is formed as a concave bulge (4a) or a convex bulge (4b).

7. The structured package (20) according to claim 6, wherein the first fine structuring (3) is designed such that concave structural elements (2a) and convex structural elements (2b) are arranged alternately, or the second fine structuring (5) is designed such that concave bulges (4a) and convex bulges (4b) are arranged alternately.

8. The structured package (20) according to one of the preceding claims, wherein the circumferential edge (8) has at least one perforation (9).

9. The structured package (20) according to one of the preceding claims, wherein the package layer (1) comprises a plurality of recesses and the recesses are designed and arranged such that they form a third fine structuring, wherein adjacent recesses have a third spacing.

10. The structured package (20) according to claim 9, wherein the third spacing is different from the first spacing (a) and from the second spacing (b), preferably the third spacing being larger than the first and the second spacing (a, b).

11. The structured package (20) according to claim 9 or 10, wherein the recesses, preferably the third fine structuring, are formed as holes.

12. The structured package (20) according to one of the preceding claims, comprising a plurality of parallel package layers (1).

13. A column (30), comprising a plurality of structured packages (20) which are arranged one above the other, at least one of which being designed according to one of claims 1 to 12.

14. Use of a structured package according to one of claims 1 to 12 for carrying out a mass and/or heat exchange between a less dense fluid phase and a more dense fluid phase in a mass exchange apparatus, in particular in a column, wherein the less dense fluid phase flows upwards and the more dense fluid phase flows downwards, wherein the mass exchange apparatus includes a structured package, and this structured package comprises the package layer, and wherein the more dense fluid phase flows at least partially as a film over the package layer.

## Revendications

1. Emballage structuré (20) comprenant une pluralité de couches d'emballage (1), dans lequel des couches d'emballage adjacentes (1) se touchent et les canaux d'écoulement (11) des couches d'emballage adjacentes (1) se croisent ouvertement, dans lequel au moins une couche d'emballage (1) comprend plusieurs éléments de structure (2) et les éléments de structure (2) sont conçus et disposés de manière à former une première structure fine (3), et dans lequel les éléments de structure adjacents (2) présentent une première distance (a), dans lequel la couche d'emballage (1) présente plusieurs renflements (4), dans lequel au moins un renflement (4) présente un bord périphérique (8), qui sont conçus et disposés de manière à former une deuxième structure fine (5), et dans lequel les renflements adjacents (4) présentent une deuxième distance (b), dans lequel les éléments de structure (2) et les renflements (4) sont conçus sans trous, la première et la deuxième structure fine (3, 5) sont superposées à un motif d'ondulation (10) et le motif d'ondulation (10) forme des canaux d'écoulement adjacents (11).

2. Emballage structuré (20) selon la revendication 1, dans lequel la première distance (a) est différente de la deuxième distance (b), de préférence la deuxième distance (b) est supérieure à la première distance (a), de manière particulièrement préférée la deuxième distance (b) est au moins deux fois plus grande que la première distance (a).

3. Emballage structuré (20) selon la revendication 1 ou 2, dans lequel la couche d'emballage (1) est conçue sans trous.

4. Emballage structuré (20) selon l'une quelconque des revendications précédentes, dans lequel les éléments de structure (2) de la première structuration fine sont disposés le long (3) d'un premier ensemble de courbes parallèle et les renflements (4) de la deuxième structuration fine (5) sont disposés le long d'un deuxième ensemble de courbes parallèle, le premier ensemble de courbes et le deuxième ensemble de courbes étant disposés à un angle de rotation λ l'un par rapport à l'autre.

5. Emballage structuré (20) selon l'une quelconque des revendications précédentes, dans lequel la deuxième distance (b) est au moins deux fois plus grande qu'une mesure de longueur de l'un des renflements (4).

6. Emballage structuré (20) selon l'une quelconque des revendications précédentes, dans lequel un élément de structure (2) est conçu comme un élément de structure concave (2a) ou un élément de structure convexe (2b) ou un renflement (4) est conçu comme un renflement concave (4a) ou un renflement convexe (4b).

7. Emballage structuré (20) selon la revendication 6, dans lequel la première structuration fine (3) est conçue de telle sorte que des éléments de structure concaves (2a) et des éléments de structure convexes (2b) sont disposés en alternance ou la deuxième structuration fine (5) est conçue de telle sorte que des renflements concaves (4a) et des renflements convexes (4b) sont disposés en alternance.

8. Emballage structuré (20) selon l'une quelconque des revendications précédentes, dans lequel le bord périphérique (8) présente au moins une perforation (9).

9. Emballage structuré (20) selon l'une quelconque des revendications précédentes, dans lequel la couche d'emballage (1) comprend plusieurs évidements et les évidements sont conçus et disposés de manière à former une troisième structuration fine, les évidements adjacents étant espacés d'une troisième distance.

10. Emballage structuré (20) selon la revendication 9, dans lequel la troisième distance est différente de la première distance (a) et de la deuxième distance (b), de préférence la troisième distance est supérieure aux première et deuxième distances (a, b).

11. Emballage structuré (20) selon la revendication 9 ou 10, dans lequel les évidements, de préférence la troisième structuration fine, sont réalisés sous forme de trous.

12. Emballage structuré (20) selon l'une quelconque des revendications précédentes, comprenant une pluralité de couches d'emballage parallèles (1).

13. Colonne (30) avec une pluralité d'emballages structurés (20) superposés, dont au moins un est conçu selon l'une quelconque des revendications 1 à 12.

14. Utilisation d'un emballage structuré selon l'une quelconque des revendications 1 à 12 pour réaliser un échange de matière et/ou de chaleur entre une phase fluide moins dense et une phase fluide plus dense dans un appareil d'échange de matière, notamment dans une colonne, la phase fluide moins dense s'écoulant vers le haut et la phase fluide plus dense s'écoulant vers le bas, l'appareil d'échange de matière contenant un emballage structuré et cet emballage structuré englobant la couche d'emballage, et la phase plus dense s'écoulant au moins partiellement sous forme de film sur la couche d'emballage.
